**Europäisches Patentamt**

**European Patent Office**

**Office européen des brevets**

(11) Veröffentlichungsnummer : **0 238 840 B1**

(19)

(12)

# EUROPÄISCHE PATENTSCHRIFT

(45) Veröffentlichungstag der Patentschrift :
**15.05.91 Patentblatt 91/20**

(51) Int. Cl.⁵ : **B64G 1/10, B64G 1/14**

(21) Anmeldenummer : **87102229.9**

(22) Anmeldetag : **17.02.87**

(54) **Nutzlasttransport- und -betriebseinrichtung für Raumfahrzeuge.**

(30) Priorität : **22.03.86 DE 3609770**

(43) Veröffentlichungstag der Anmeldung :
**30.09.87 Patentblatt 87/40**

(45) Bekanntmachung des Hinweises auf die
Patenterteilung :
**15.05.91 Patentblatt 91/20**

(84) Benannte Vertragsstaaten :
**FR GB IT NL**

(56) Entgegenhaltungen :
**CH-A- 554 798**
**FR-A- 2 372 083**
**US-A- 4 193 388**

(56) Entgegenhaltungen :
**MACHINE DESIGN, Band 36, Nr. 4, 13. February 1964, Seiten 154-155, Cleveland, Ohio, US;
"Astronaut tool's "floating"; "Motor minimizes reaction torque"
IDEM**

(73) Patentinhaber : **ERNO Raumfahrttechnik
Gesellschaft mit beschränkter Haftung
Hünefeldstrasse 1-5
W-2800 Bremen 1 (DE)**

(72) Erfinder : **Kerstein, Lothar
An der Weide 32
W-2734 Sottrum (DE)**
Erfinder : **Ries, Manfred
Plaggenmatten 4
W-2875 Ganderkesee (DE)**
Erfinder : **Weydandt, Jürgen
Strassburger Strasse 24
W-2800 Bremen (DE)**

EP 0 238 840 B1

**Beschreibung**

Die Erfindung betrifft eine Nutzlasttransport- und -betriebseinrichtung für Raumfahrzeuge.

Es ist bekannt, daß Nutzlasten, wie zum Beispiel Experimentiereinrichtungen, auf Raumfahrzeugen betrieben werden. Diese Nutzlasten befinden sich in oder an den Raumfahrzeugen und sind mechanisch, elektrisch und wärmetechnisch starr mit diesen verbunden.

Außerdem sind Nutzlastbehälter bekannt, die zur Aufnahme von selbsttätig arbeitenden Experimentiereinrichtungen dienen. Solche Nutzlastbehälter sind z.B. zylindrische Gebilde, die vorzugsweise im Laderaum eines Weltraumtransporters, wie das sogenannte Space Shuttle der Vereinigten Staten von Amerika, fest eingebaut werden. Nachteilig ist, daß die Experimenteinrichtungen dem Platzangebot der Nutzlastbehälter angepaßt werden müssen, und daß ein Austausch der Nutzlasten und der Nutzlastbehälter nur auf der Erde erfolgen kann. Hinzu kommt, daß die Flugzeit, und damit die Experimentierzeit im Weltraum, durch den Weltraumtransporter auf wenige Tage beschränkt ist. Außerdem wirken die Beschleunigungskräfte und die Verschmutzung der näheren Weltraumumgebung, die durch die Aktivitäten der Astronauten an Bord des Weltraumtransporters verursacht werden, störend.

Um den Anforderungen der Nutzlasten nach langen Flugzeiten und ungestörten Umweltbedingungen im Weltraum nachzukommen, werden Raumfahrzeuge entwickelt, auf denen die Nutzlasten in standardisierten und im Weltraum austaschbaren Behältern untergebracht werden.

Aufgabe der vorliegenden Erfindung ist es daher, eine Einrichtung für Raumfahrzeuge zu schaffen, die sowohl für den Transport als auch für den Betrieb der Experimentiereinrichtungen geeignet ist, über standardisierte Abmessungen sowie über standardisierte elektrische, mechanische und wärmetechnische Schnittstellen zum Raumfahrzeug verfügt. Zudem soll diese Einrichtung auf der Erde und im Weltraum einfach auf dem Raumfahrzeug befestigt und wieder entfernt werden können.

Gemäß der Erfindung wird diese Aufgabe durch eine Nutzlasttransport- und -betriebseinrichtung gelöst, die aus einer Nutzlastbefestigungsplatte und einem modularem Nutzlasttransport- und -betriebsbehälter besteht. Weitere Ausgestaltungen der Erfindung sind den Ansprüchen 2 bis 16 zu entnehmen.

Mit Hilfe der beigefügten Zeichnungen lassen sich die Konstruktions- und Wirkprinzipien der Nutzlasttransport- und -betriebseinrichtung erläutern.

Im Einzelnen zeigen :

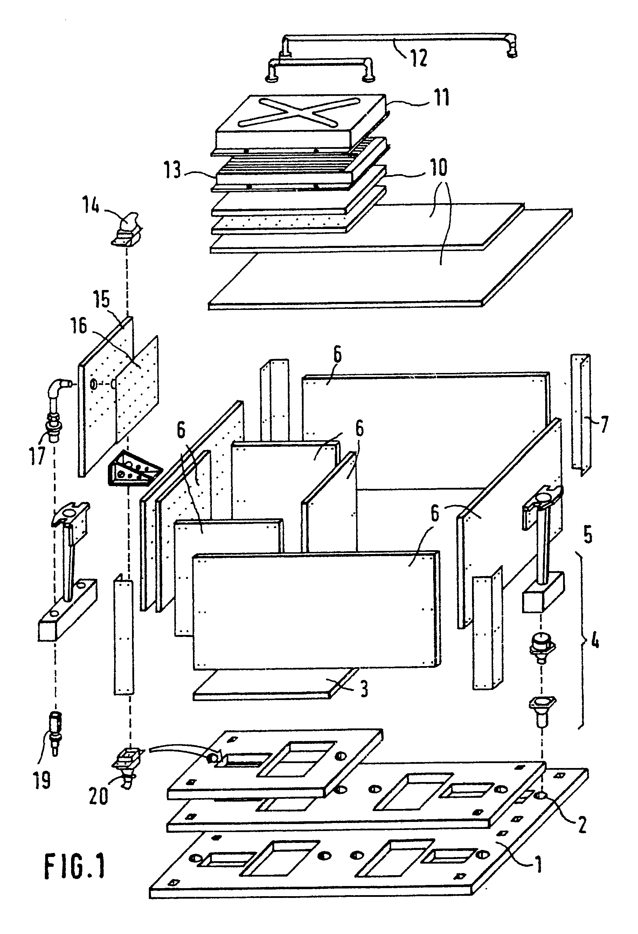

Figur 1 eine Übersichtszeichnung einer nach einem Baukastenprinzip konstruierten Nutzlasttransport- und -betriebseinrichtung,

Figur 2 den Andockvorgang eines Nutzlasttransport- und -betriebsbehälters an die Nutzlastbefestigungsplatte,

Figur 3 den Vorgang zum Befestigen eines Nutzlasttransport und -betriebsbehälters an eine Nutzlastbefestigungsplatte mit Hilfe einer Schraubmaschine,

Figur 4 die Anordnung von Nutzlasttransport- und -betriebsbehältern unterschiedlicher Größe auf Nutzlastbefestigungsplatten, die wiederum auf einer Raumfahrzeugstruktur befestigt sind.

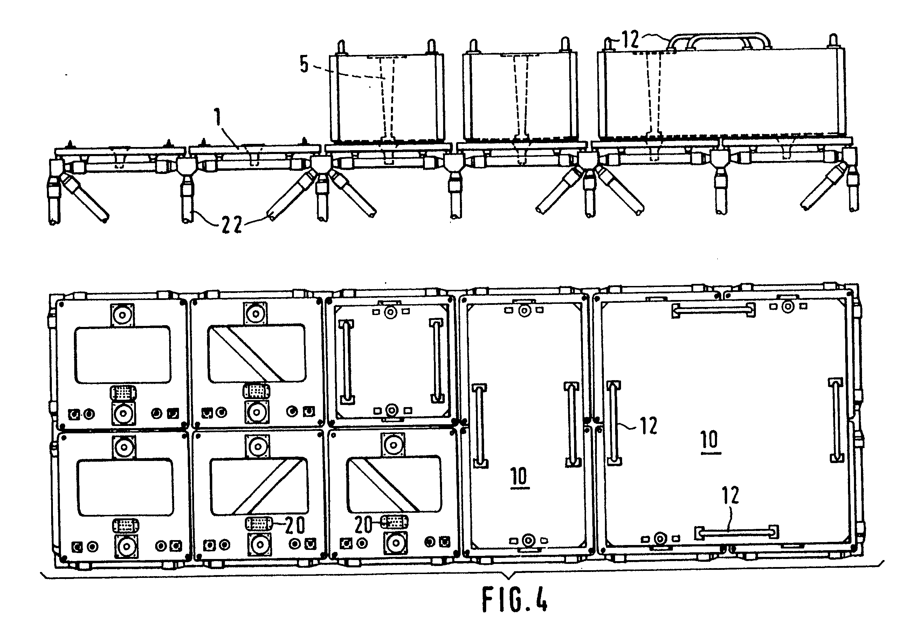

Eine Nutzlastbefestigungsplatte 1 hat eine ebene, rechtwinklige Form und steht in drei standardisierten Größen von 70 × 70 cm² bzw. 70 × 140 cm² oder 140 × 140 cm² zur Verfügung. Sie können, unterschiedlich kombiniert so auf einer Raumfahrzeugstruktur 22 befestigt werden, daß eine völlig ebene Fläche zum Anbringen der Nutzlasttransport- und -betriebsbehälter entsteht (Figur 4).

Die Nutzlastbefestigungsplatten 1 verfügen über Einrichtungen, mit deren Hilfe mechanische, elektrische und wärmetechnische Verbindungen zu den Nutzlasttransport- und -betriebsbehältern hergestellt werden.

Für die elektrische Verbindung ist eine standardisierte mehrpolige Steckdose 20 vorgesehen, die Leitungen für die Stromversorgung sowie für Steuer- und Datensignale enthält. Die wärmetechnische Verbindung erfolgt über eine standardisierte Steckdose 19 für eine aktive Flüssigkeitskühleinrichtung.

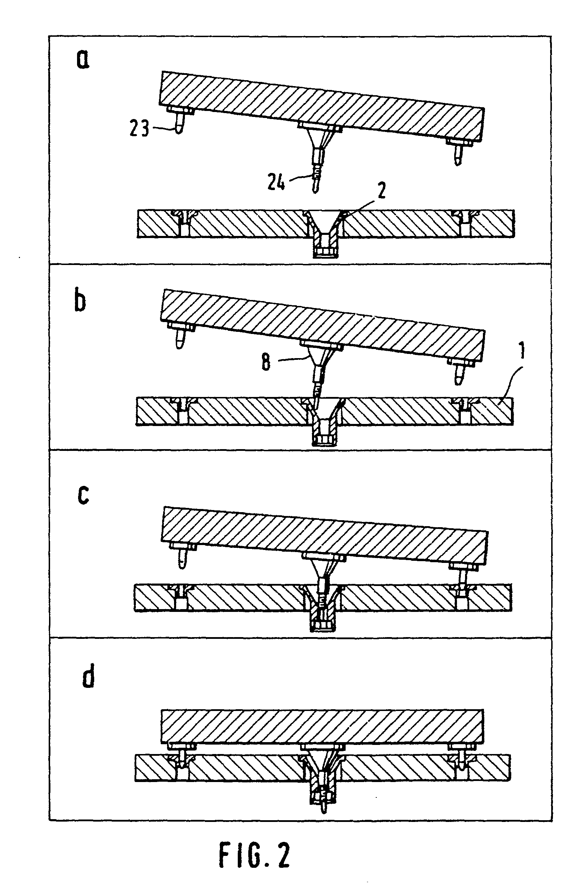

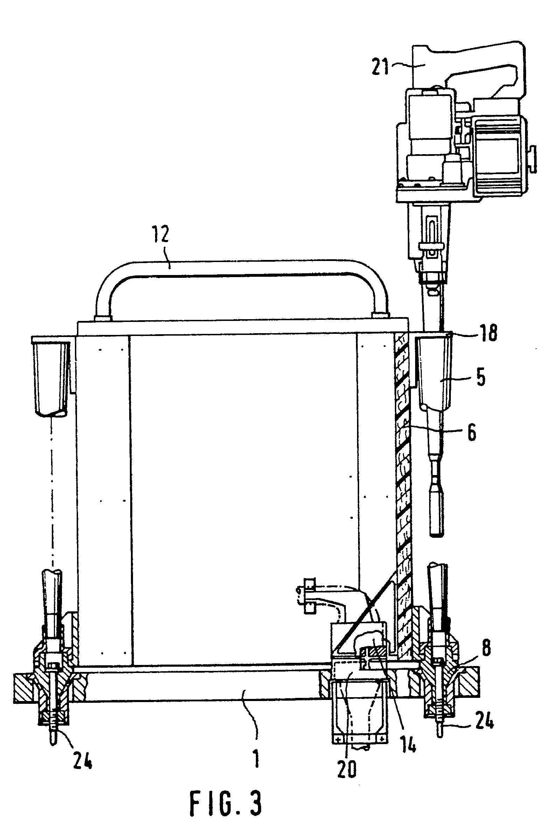

Die mechanische Verbindung geschieht durch zwei Befestigungsschrauben 24 und vier Befestigungspaßstifte 23, die sich an der Unterseite der Nutzlasttransport- und -betriebsbehälter befinden und in entsprechende Befestigungspunkte auf der Nutzlastbefestigungsplatte 1 eingeführt werden (Figur 2 ; Figur 3).

Die Nutzlasttransport- und -betriebsbehälter werden entsprechend den Nuzlastanforderungen aus standardisierten Einzelteilen nach dem Baukastenprinzip zusammengebaut, wobei Behälter von 60 × 60 cm² bzw. 60 × 120 cm² oder 120 × 120 cm² Grundfläche mit nutzlastspezifische Höhen, vorzugsweise 50 cm Höhe, herstellbar sind.

Die standardisierten Einzelteile bestehen aus Seitenwänden 6, Experiment-Bodenplatten 3, Seitenwand-Befestigungseinrichtungen 7, Abdeckvorrichtungen 10, passiver Temperaturkontrolleinrichtung 13, Handhabungsschutzhauben für die passive Temperaturkontrolleinrichtung 11, Flüssigkeitskühleinrichtung-Verbindungswand 15, Flüssigkeitskühleinrichtung 16, Stecker 14 für den elektrischen Kontakt mit der Nutzlastbefestigungsplatte 1, Stecker 17 für die Verbindung der aktiven Flüssigkeitskühleinrichtung 16 mit der Nutzlastbefestigungsplatte 1, sowie Befestigungsvorrichtungen 4 für den Nutzlasttransport- und -betriebsbehälter.

Vorzugsweise besteht ein solcher Nutzlasttransport- und -betriebsbehälter aus einer Experiment-Bodenplatte 3, vier Seitenwänden 6, vier Seitenwand-Befestigungseinrichtungen 4, einem Stecker 17 für die aktive Flüssigkeitskühleinrichtung, einem Stecker 14 für die elektrischen Verbindungen sowie einer aktiven Flüssigkeitskühleinrichtung 16 mit Flüssigkeitskühleinrichtung-Verbindungswand 15. Grundsätzlich kann ein solcher Nutzlasttransport- und -betriebsbehälter aber auch nur aus einer Experiment-Bodenplatte 3, zwei Seitenwänden 6 mit Nutzlastbehälter-Befestigungsvorrichtungen 4, dem Stecker 14 für die elektrischen Verbindungen und zwei Handgriffen 12 bestehen.

Die Befestigung des Nutzlasttransport- und -betriebsbehälters an der Nutzlastbefestigungsplatte 1 erfolgt im Erdorbit vorzugsweise durch Astronauten, oder mit Hilfe eines automatischen oder ferngesteuerten Manipulatorarms. Zur Erleichterung dieses Befestigungsvorganges sind die Befestigungspunkte 2 auf der Nutzlastbefestigungsplatte 1 sowie die Befestigungselemente 8 der Nutzlasttransport- und -betriebsbehälter konisch geformt.

Wird der Nutzlasttransport- und -betriebsbehälter schief auf die Nutzlastbefestigungsplatte 1 gesetzt, so wirken diese Bauteile aufgrund ihrer Form wie Zentrierhilfen, die ein genaues Aufsetzen der Befestigungspaßstifte 23 erlauben (Figur 2).

Die in den beiden Befestigungselementen 8 befindlichen Befestigungsschrauben 24 werden anschließend mit Hilfe einer an sich bekannten Schraubmaschine 21 in die Befestigungspunkte 2 eingeschraubt, indem das Schraubwerkzeug der Schraubmaschine 21 durch die trichterförmige Befestigungswerkzeug-Führungseinrichtung 5 geführt und auf die Befestigungsschraube 24 aufgesetzt wird. Dabei wird die Schraubmaschine 21 an einem an sich bekannten Schraubmaschinen-Befestigungselement 18 angebracht. Während des beziehens der Befestigungsschrauben 24 zentrieren die Befestigungspaßstifte 23 den Nutzlasttransport- und -betriebsbehälter so, daß die Steckkontakte (14, 20 ; 17, 19) geschlossen werden.

Soll der Nutzlasttransport- und -betriebsbehälter von der Nutzlastbefestigungsplatte 1 entfernt werden, so bewirkt das Lösen der Befestigungsschrauben 24 ein Lösen der Steckkontakte (14, 20 ; 17, 19). Ein Astronaut hat anschließend nur noch eine geringe Kraft aufzuwenden, um den Nutzlasttransport- und -betriebsbehälter mit den Handgriffen 12 von der Nutzlastbefestigungsplatte zu entfernen.

Zur Gewichtsersparnis sind die Seitenwände 6 und die Abdeckvorrichtungen 10 aus Leichtbaustrukturen, wie faserverstärkte Verbundwerkstoffe oder Wabenkonstruktionen, hergestellt.

Die beschriebene Nutzlasttransport- und -betriebseinrichtung ermöglicht einen variablen Aufbau von Nutzlasten auf einem Raumfahrzeug. Das Volumen und die Form der Nutzlasten hängt nicht von einer bestimmten Behältergröße ab, sondern von den Anforderungen an ein Experiment. Die Nutzlasttransport- und -betriebsbehälter sind an einer gemeinsammen elektrischen und wärmetechnischen Ver- und Entsorgungseinrichtung angeschlossen, sowie im Weltraum und auf der Erde auf einer Nutzlastbefestigungsplatte 1 leicht befestigbar und einfach lösbar.

## Ansprüche

1. Nutzlasttransport- und -betriebseinrichtung für Raumfahrzeuge, dadurch **gekennzeichnet,** daß die Nutzlasttransport- und -betriebseinrichtung aus ebenen, an Raumfahrzeugen vorgesehenen Nutzlastbefestigungsplatten (1) sowie aus standardisierten Einzelteilen, die nach dem Baukastenprinzip als Nutziasttransport- und -betriebsbehällern zusammengebaut sind, besteht, die entsprechend den Nutzerwünschen unterschiedliche Größen und Formen aufweisen und an den Nutzlastbefestigungsplatten (1) in austauschbarer und ergänzender Weise befestigbar sind.

2. Einrichtung nach Anspruch 1, dadurch **gekennzeichnet,** daß die Nutzlastbefestigungsplatten (1) eine ebene rechtwinklige Form und standardisierte Größen von 70 × 70 cm² bzw. 70 × 140 cm² oder 140 × 140 cm² aufweisen.

3. Einrichtung nach einem der Ansprüche 1 bis 2, dadurch **gekennzeichnet,** daß die Nutzlastbefestigungsplatten (1) auf einer Satellitenstruktur (22) angebracht sind.

4. Einrichtung nach einem der Ansprüche 1 bis 3, dadurch **gekennzeichnet,** daß die Nutzlastbefestigungsplatten (1) über Einrichtungen für mechanische, elektrische und wärmetechnische Verbindungen zu Nutzlasttransport- und -betriebsbehältern verfügen.

5. Einrichtung nach einem der Ansprüche 1 bis 4, dadurch **gekennzeichnet,** daß für die elektrische Verbindung einer Nutzlastbefestigungsplatte (1) mit einem Nutzlasttransport- und -betriebsbehälter ein standarisierter Steckkontakt(20) vorgesehen ist und daß dieser Steckkontakt Leitungen für die Stromversorgung sowie für Steuer- und Datensignale enthält.

6. Einrichtung nach einem der Ansprüche 1 bis 5, dadurch **gekennzeichnet,** daß die wärmetechnische Verbindung der Nutzlastbefestigungsplatte (1) mit dem Nutzlasttransport- und -betriebsbehälter über einen standardisierten Steckkontakt (19)einer aktiven Flüssigkeitskühleinrichtung erfolgt.

7. Einrichtung nach einem der Ansprüche 1 bis 6, dadurch **gekennzeichnet,** daß der Nutzlasttransport- und -betriebsbehälter nach dem Baukasten prinzip aus standardisierten Einzelteilen aufgebaut ist, die aus Seitenwänden (6), Experiment-Bodenplatte (3), Seitenwand-Befestigungseinrichtungen (7), Abdeckvorrichtungen (10), passiven Temperaturkontrolleinrichtungen (13), Handhabungsschutzhauben für die passiven Temperaturkontrolleinrichtungen (11), aktiven Flüssigkeitskühleinrichtungen (16), Steckern (14) für den elektrischen Kontakt mit der Nutzlastbefestigungsplatte (1), Handgriffe (12), Kühleinrichtung-Verbindungswand (15), Stekkern (17) für die Verbindung der aktiven Flüssigkeitskühleinrichtung (16) mit der Nutzlastbefestigungsplatte (1) sowie Befestigungsvorrichtungen (4) für den Nutzlasttransport- und -betriebsbehälter bestehen.

8. Einrichtung nach einem der Ansprüche 1 bis 7, dadurch **gekennzeichnet,** daß die Befestigung des Nutzlasttransport- und -betriebsbehälters auf der Nutzlastbefestigungsplatte (1) durch zwei Schrauben (24) und durch vier Befestigungspaßstifte (23) erfolgt.

9. Einrichtung nach einem der Ansprüche 1 bis 8, dadurch **gekennzeichnet,** daß der Befestigungspunkt (2) auf der Nutzlastbefestigungsplatte (1) sowie das Befestigungselement (8) des Nutzlasttransport- und -betriebsbehälters konisch geformt sind.

10. Einrichtung nach einem der Ansprüche 1 bis 9, dadurch **gekennzeichnet,** daß für das Anziehen der Schrauben (24) des Nutzlasttransport- und -betriebsbehälters eine Schraubmaschine (21) vorgesehen ist, die vorzugsweise an einem Schraubmaschinen-Befestigungselement (18) befestigt wird.

11. Einrichtung nach einem der Ansprüche 1 bis 10, dadurch **gekennzeichnet,** daß das Einführen der Schraubvorrichtung der Schraubmaschine (21) in eine trichterförmige Befestigungswerkzeug-Führungseinrichtung (5) durch das Schraubmaschinen-Befestigungselement (18) erfolgt.

12. Einrichtung nach einem der Ansprüche 1 bis 11, dadurch **gekennzeichnet,** daß beim Anziehen der Schrauben (24) die Befestigungspaßstifte (23) den Nutzlasttransport- und -betriebsbehälter zentrieren und die Steckkontakte (14, 20 ; 17, 19) geschlossen werden.

13. Einrichtung nach einem der Ansprüche 1 bis 12, dadurch **gekennzeichnet,** daß ein Nutzlasttransport- und -betriebsbehälter durch Lösen der Schrauben (24) von seinen Steckkontakten (14, 20 ; 17, 19) abkoppelbar und gegen einen anderen austauschbar ist.

14. Einrichtung nach einem der Ansprüche 1 bis 13, dadurch **gekennzeichnet,** daß die Nutzlasttransport- und -betriebsbehälter die Grundfläche 60 × 60 cm² bzw. 60 × 130 cm² oder 130 × 130 cm² aufweisen und ihre Höhe frei wählbar ist.

15. Einrichtung nach einem der Ansprüche 1 bis 14, dadurch **gekennzeichnet,** daß die Nutzlasttransport- und -betriebsbehälter aus mindestens einer Experimentbodenplatte (3), zwei Nutzlastbehälter-Befestigungsvorrichtungen (4) an zwei Seitenwänden (6) und zwei Handgriffen (12) bestehen.

16. Einrichtung nach einem der Ansprüche 1 bis 15, dadurch **gekennzeichnet,** daß die Seitenwände (6) und die Abdeckvorrichtungen (10) aus Leichtbaustrukturen bestehen.

## Claims

1. A payload transporting and operating device for spacecraft, **characterised in that** the payload transporting and operating device consists of flat payload fixing plates (1) which are provided on spacecraft and of standardised individual parts which are assembled according to the mechanical assembly technique as payload transporting and operating containers which have different sizes and shapes according to the user's wishes and which are fixable to the payload fixing plates (1) so as to be capable of being exchanged and added to.

2. A device according to claim 1, characterised in that the payload fixing plates (1) have a flat rectangular shape and standardised sizes of 70 × 70 cm² and/or 70 × 140 cm² or 140 × 140 cm².

3. A device according to any one of claims 1 to 2, **characterised in that** the payload fixing plates (1) are arranged on a satellite structure (22).

4. A device according to any one of claims 1 to 3, **characterised in that** the payload fixing plates (1) have available devices for mechanical, electrical and thermal technology connections to payload transporting and operating containers.

5. A device according to any one of claims 1 to 4, **characterised in that** a standardised plug contact (20), is provided for the electrical connection of a payload fixing plate (1) to a payload transporting and operating container and that this plug contact includes lines for current supply and for control and data signals.

6. A device according to any one of claims 1 to 5, **characterised in that** the thermal technology connection of the payload fixing plate (1) to the payload transporting and operating container takes place via a standardised plug contact (19) of an active liquid-cooling device.

7. A device according to any one of claims 1 to 6, **characterised in that** the payload transporting and operating container is constructed according to the mechanical assembly technique from standardised individual parts which consist of side walls (6), an experiment baseplate (3), side wall fixing devices (7), cover devices (10), passive temperature-checking devices (13), operational protective hoods the passive temperature -checking devices (11), active liquid-cooling services (16), plugs (14) for the electrical contact with the payload fixing plate (1), handles (12), cooling device connecting wall (15), plugs (17) for connecting the active liquid-cooling device (16) with the payload fixing plate (1) and fixing devices (4) for the payload transporting and operating container.

8. A device according to any one of claims 1 to 7, **characterised in that** the fixing of the payload transporting and operating container on to the payload fixing plate (1) takes place through two screws (24) and four fixing locating pins (23).

9. A device according to any one of claims 1 to 8, **characterised in that** the fixing point (2) on the payload fixing plate (1) and the fixing element (8) of the payload transporting and operating container are conically shaped.

10. A device according to any one of claims 1 to 9, **characterised in that** a screwdriver (21) is provided for tightening the screws (24) of the payload transporting and operating container and is preferably fixed to a screwdriver fixing element (18).

11. A device according to any one of claims 1 to 10, **characterised in that** the introduction of the screwing device of the screwdriver (21) into a funnel-shaped fixing tool guide device (5) takes place through the screwdriver fixing element (18).

12. A device according to any one of claims 1 to 11, **characterised in that** when tightening the screws (24) the fixing locating pins (23) centre the payload transporting and operating container and the plug contacts (14, 20 ; 17, 19) are made.

13. A device according to any one of claims 1 to 12, **characterised in that** a payload transporting and operating container may be uncoupled by releasing the screws (24) from its plug contacts (14, 20 ; 17, 19) and may be exchanged for another.

14. A device according to any one of claims 1 to 13, **characterised in that** the payload transporting and operating container has a base area $60 \times 60$ cm$^2$ and/or $60 \times 130$ cm$^2$ or $130 \times 130$ cm$^2$ and its height may be selected freely.

15. A device according to any one of claims 1 to 14, **characterised in that** the payload transporting and operating container consists of at least one experiment baseplate (3), two useful load container fixing devices (4) on two side walls (6), and two handles (12).

16. A device according to any one of claims 1 to 15, **characterised in that** the side walls (6) and the cover devices (10) consist of lightweight structures.

## Revendications

1. Installation de transport et de mise en oeuvre d'une charge utile pour des engins spatiaux, caractérisée en ce qu'elle se compose de plaques de fixation (1) pour la charge utile, plaques prévues à bord de l'engin spatial ainsi que de pièces séparées, normalisées, qui se combinent selon le principe du jeu de construction pour former des conteneurs de transport et de mise en oeuvre de charge utile, ces conteneurs ayant des dimensions et des formes différentes correspondant au souhait de l'utilisateur et se fixent de manière interchangeable et complémentaire sur les plaques de fixation (1).

2. Installation selon la revendication 1, caractérisée en ce que les plaques de fixation de charge utile (1) ont une forme rectangulaire plane et des dimensions normalisées de $70 \times 70$ cm$^2$ ; $70 \times 140$ cm$^2$ ou $140 \times 140$ cm$^2$.

3. Installation selon l'une des revendications 1 et 2, caractérisée en ce que les plaques de fixation de charge utile (1) sont montées sur une structure de satellite (22).

4. Installation selon l'une des revendications 1 à 3, caractérisée en ce que les plaques de fixation de charge utile (1) comportent des moyens pour assurer les connexions mécaniques, électriques et thermiques avec les conteneurs de transport et de mise en oeuvre de charge utile.

5. Installation selon l'une des revendications 1 à 4, caractérisée en ce qu'un contact enfichable (20), normalisé est prévu pour la connexion électrique d'une plaque de fixation (1) et d'un conteneur de transport et de mise en oeuvre et ce contact enfichable comporte des lignes pour l'alimentation électrique et la transmission des signaux de commande et de données

6. Installation selon l'une des revendications 1 à 5, caractérisée en ce que la connexion thermique entre la plaque de fixation (1) et le conteneur de transport et de mise en oeuvre de charge utile se fait par un contact enfichable (19) normalisé d'une installation active de refroidissement par liquide.

7. Installation selon l'une des revendications 1 à 6, caractérisée en ce que le conteneur de transport et de mise en oeuvre de la charge utile est réalisé selon le principe du jeu de construction à partir de composants normalisés comprenant les parois latérales (6), la plaque de fond (3) pour les expériences, les moyens de fixation (7) des parois latérales, les moyens de couverture (10), les installations passives de contrôle de température (13), les capots de protection de manutention pour les installations de contrôle passives de température (11), les installations actives de refroidissement par liquide (16), les fiches (14) pour les connexions électriques avec la plaque de fixation (1), les poignées (12), la paroi de liaison (15) de l'installation de refroidissement, des prises (17) pour la connexion de l'installation active de refroidissement par liquide (16) avec la plaque de fixation (1) ainsi que des dispositifs de fixation (4) pour le conteneur de transport et de mise en oeuvre de la charge utile.

8. Installation selon l'une des revendications 1 à 7, caractérisée en ce que la fixation du conteneur de transport et de mise en oeuvre de la charge utile sur la plaque de fixation (1) assurée par deux vis (24) et par quatre tétons de positionnement (23).

9. Installation selon l'une des revendications 1 à 8, caractérisée en ce que le point de fixation (2) sur la plaque de fixation (1) ainsi que l'élément de fixation (8) du conteneur de transport et de mise en oeuvre ont une forme conique.

10. Installation selon l'une des revendications 1 à 8, caractérisée en ce qu'il est prévu une visseuse (21) pour serrer les vis (24) du conteneur de transport et de mise en oeuvre, cette visseuse étant de préférence fixée sur un élément de fixation (18) pour les visseuses.

11. Installation selon l'une des revendications 1 à 10, caractérisée en ce que l'introduction du dispositif de vissage de la visseuse (21) se fait dans un moyen de guidage (5) pour l'outil, en forme d'entonnoir à travers l'élément de fixation (18).

12. Installation selon l'une des revendications 1 à 11, caractérisée en ce que lors du serrage des vis (24), les tétons de positionnement (23) assurent le centrage du conteneur de transport et de mise en oeuvre et la fermeture des contacts enfichables (14, 20 ; 17, 19).

13. Installation selon l'une des revendications 1 à 12, caractérisée en ce qu'un conteneur de transport et de mise en oeuvre de la charge utile peut être séparé des contacts enfichables (14, 20 ; 17, 19) par desserrage des vis (24) et être remplacé par un autre conteneur.

14. Installation selon l'une des revendications 1 à 13, caractérisée en ce que les conteneurs de transport et de mise en oeuvre de la charge utile ont une surface de base de $60 \times 60$ cm$^2$ ou $60 \times 120$ cm$^2$ ou $120 \times 120$ cm$^2$ et leur hauteur est libre.

15. Installation selon l'une des revendications 1 à 14, caractérisée en ce que le conteneur de transport et de mise en oeuvre de la charge utile se compose d'au moins une plaque de fond (3) pour les expériences, de deux dispositifs de fixation (4) du conteneur sur deux parois latérales (6) et deux poignées (12).

16. Installation selon l'une des revendications 1 à 15, caractérisée en ce que les parois latérales (6) et les dispositifs de recouvrement (10) sont des structures légères.

FIG.1

FIG. 2

FIG. 3

FIG.4

EP 0 238 840 B1